(19)

Europäisches
Patentamt

European
Patent Office

Office européen
des brevets

(11) **EP 4 660 962 A1**

(12) **EUROPEAN PATENT APPLICATION**

(43) Date of publication:
**10.12.2025  Bulletin 2025/50**

(21) Application number: **25181247.5**

(22) Date of filing: **06.06.2025**

(51) International Patent Classification (IPC):
**G06V 10/26** (2022.01)   **G06V 10/764** (2022.01)
**G06V 10/82** (2022.01)   **G06V 20/70** (2022.01)

(52) Cooperative Patent Classification (CPC):
**G06V 10/26; G06V 10/764; G06V 10/82;
G06V 20/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **07.06.2024  US 202418737176**

(71) Applicant: **Robert Bosch GmbH
70442 Stuttgart (DE)**

(72) Inventors:
 • **WANG, Xiaoqi
   Dublin, OH 43017 (US)**
 • **HE, Wenbin
   Santa Clara, CA 95050 (US)**

 • **SEBASTIAN, Clint
   70499 Stuttgart (DE)**
 • **HENRIQUE PIAZENTIN ONO, Jorge
   Sunnyvale, CA 94086 (US)**
 • **LI, Xin
   Sunnyvale, CA 94085 (US)**
 • **BEHPOUR, Sima
   Sunnyvale, CA 94085 (US)**
 • **DOAN, Thang
   San Francisco, CA 94131 (US)**
 • **GOU, Liang
   San Jose, CA 95124 (US)**
 • **REN, Liu
   Saratoga, CA 95070 (US)**

(74) Representative: **Isarpatent
Patent- und Rechtsanwälte
Barth Hassa Peckmann & Partner mbB
Friedrichstraße 31
80801 München (DE)**

(54) **SYSTEM AND METHOD WITH UNIVERSAL SEGMENT EMBEDDINGS FOR
OPEN-VOCABULARY IMAGE SEGMENTATION**

(57)     A computer-implemented system and method relates to open-vocabulary image segmentation. A set of data pairs is automatically generated using a digital image and a corresponding caption. The set of data pairs include image segments and corresponding text data. The set of data pairs includes (i) a first subset that includes object segments as the image segments and corresponding object data as the text data and (ii) a second subset that includes part segments as the image segments and corresponding part data as the text data. A universal segmentation embedding (USE) model includes an image encoder and a segment embedding head. The image encoder generates patch embeddings based on patches of the digital image. The segment embedding head generates segment embeddings based on the image segments and the patch embeddings. Semantic segmentation data is generated based on the segment embeddings.

FIG. 1B

**Description**

TECHNICAL FIELD

This disclosure relates generally to computer vision, and more particularly to digital image processing with machine learning systems for open-vocabulary image segmentation.

BACKGROUND

Open-vocabulary image segmentation typically involves partitioning images into semantically meaningful segments and classifying them with arbitrary classes defined by texts. In this regard, there are vision foundation models, such as the Segment Anything Model (SAM), which generate class-agnostic image segments. However, the main challenge in open-vocabulary image segmentation now lies in accurately classifying these segments into text defined categories. More specifically, the existing open-vocabulary image segmentation methods face challenges in fully utilizing image segments generated by foundation models. For instance, end-to-end methods such as side adapter network (SAN) cannot take image segments generated by foundation models as input or prompts to assign class labels. While OVSeg does provide a two-stage method that decouples image segmentation and classification, OVSeg is still limited in classifying segments at various granularities due to the constraints of the training data.

SUMMARY

The following is a summary of certain embodiments described in detail below. The described aspects are presented merely to provide the reader with a brief summary of these certain embodiments and the description of these aspects is not intended to limit the scope of this disclosure. Indeed, this disclosure may encompass a variety of aspects that may not be explicitly set forth below.

According to at least one aspect, a computer-implemented method relates to semantic segmentation via a universal segmentation embedding (USE) model. The method includes receiving a digital image. The method includes generating a set of data pairs using the digital image and a caption. The caption describes the digital image. The set of data pairs include image segments and text data. The text data are labels that describe the image segments. The set of data pairs have different levels of granularity. The set of data pairs include (i) a first subset that includes object segments as the image segments and corresponding object data as the text data and (ii) a second subset that includes part segments as the image segments and corresponding part data as the text data, where the object segments correspond to objects and where the part segments correspond to specific features of the object segments. The method includes generating, via an image encoder, patch embeddings based on patches of the digital image. Each patch is a distinct region of the digital image. The method includes generating, via a segment embedding head, segment embeddings using the image segments and the patch embeddings. The method includes generating, via a text encoder, text embeddings based on the text data. The method includes computing contrastive loss using the segment embeddings and the text embeddings. The method includes updating trainable parameters of the USE model based on the contrastive loss. The USE model includes at least the image encoder and the segment embedding head.

According to at least one aspect, a system includes one or more processors and one or more computer memory. The one or more computer memory is in data communication with the one or more processors. The one or more computer memory has computer readable data stored thereon. The computer readable data includes instructions that, when executed by one or more processors, causes the one or more processors to perform a method for semantic segmentation via a USE model. The method includes receiving a digital image. The method includes generating a set of data pairs using the digital image and a caption. The caption describes the digital image. The set of data pairs include image segments and text data. The text data are labels that describe the image segments. The set of data pairs have different levels of granularity. The set of data pairs include (i) a first subset that includes object segments as the image segments and corresponding object data as the text data and (ii) a second subset that includes part segments as the image segments and corresponding part data as the text data, where the object segments correspond to objects and where the part segments correspond to specific features of the object segments. The method includes generating, via an image encoder, patch embeddings based on patches of the digital image. Each patch is a distinct region of the digital image. The method includes generating, via a segment embedding head, segment embeddings using the image segments and the patch embeddings. The method includes generating, via a text encoder, text embeddings based on the text data. The method includes computing contrastive loss using the segment embeddings and the text embeddings. The method includes updating trainable parameters of the USE model based on the contrastive loss. The USE model includes at least the image encoder and the segment embedding head.

According to at least one aspect, one or more non-transitory computer readable mediums having computer readable data stored thereon. The computer readable data include instructions that, when executed by one or more processors, cause the one or more processors to perform a method for semantic segmentation via a USE model. The method includes receiving a digital image. The method includes generating a set of data pairs using the digital image and a caption. The caption describes the digital image. The set of data pairs include image segments and text data. The text data are labels that describe the image segments. The set of data pairs have different levels of granularity. The set of data pairs include (i) a first subset that includes object segments as the image segments and corresponding object data as the text data and (ii) a second subset that includes part segments as the image segments and corresponding part data as the text data, where the object segments correspond to objects and where the part segments correspond to specific features of the object segments. The method includes generating, via an image encoder, patch embeddings based on patches of the digital image. Each patch is a distinct region of the digital image. The method includes generating, via a segment embedding head, segment embeddings using the image segments and the patch embeddings. The method includes generating, via a text encoder, text embeddings based on the text data. The method includes computing contrastive loss using the segment embeddings and the text embeddings. The method includes updating trainable parameters of the USE model based on the contrastive loss. The USE model includes at least the image encoder and the segment embedding head.

These and other features, aspects, and advantages of the present invention are discussed in the following detailed description in accordance with the accompanying drawings throughout which like characters represent similar or like parts. Furthermore, the drawings are not necessarily to scale, as some features could be exaggerated or minimized to show details of particular components.

BRIEF DESCRIPTION OF THE FIGURES

FIG. 1A is a block diagram of an example of the universal segment embedding framework according to an example embodiment of this disclosure.

FIG. 1B is a diagram of an example of an auto-labeling pipeline according to an example embodiment of this disclosure.

FIG. 1C is a diagram of an example of a universal embedding model according to an example embodiment of this disclosure.

FIG. 2 is a flow diagram with non-limiting examples to illustrate aspects of the auto-labeling pipeline according to an example embodiment of this disclosure.

FIG. 3 is a flow diagram that illustrates aspects of the image captioning module of FIG. 2 according to an example embodiment of this disclosure.

FIG. 4 is a flow diagram that illustrates aspects of the referring expression grounding module of FIG. 2 according to an example embodiment of this disclosure.

FIG. 5 a diagram of an example of the architecture of the universal segment embedding model according to an example embodiment of this disclosure.

FIG. 6 is a block diagram of an example of a system that includes the universal segment embedding framework according to an example embodiment of this disclosure.

FIG. 7 is a diagram of an example of a control system that employs the universal segment embedding model according to an example embodiment of this disclosure.

FIG. 8 is a diagram of the control system of FIG.7 with respect to mobile machine technology according to an example embodiment of this disclosure.

FIG. 9 is a diagram of the control system of FIG. 7 with respect to security technology according to an example embodiment of this disclosure.

FIG. 10 is a diagram of the control system of FIG. 7 with respect to imaging technology according to an example embodiment of this disclosure.

FIG. 11 illustrates non-limiting examples that show advantages of the auto-labeling pipeline according to an example embodiment of this disclosure.

DETAILED DESCRIPTION

The embodiments described herein, which have been shown and described by way of example, and many of their advantages will be understood by the foregoing description, and it will be apparent that various changes can be made in the form, construction, and arrangement of the components without departing from the disclosed subject matter or without sacrificing one or more of its advantages. Indeed, the described forms of these embodiments are merely explanatory. These embodiments are susceptible to various modifications and alternative forms, and the following claims are intended to encompass and include such changes and not be limited to the particular forms disclosed, but rather to cover all modifications, equivalents, and alternatives falling with the spirit and scope of this disclosure.

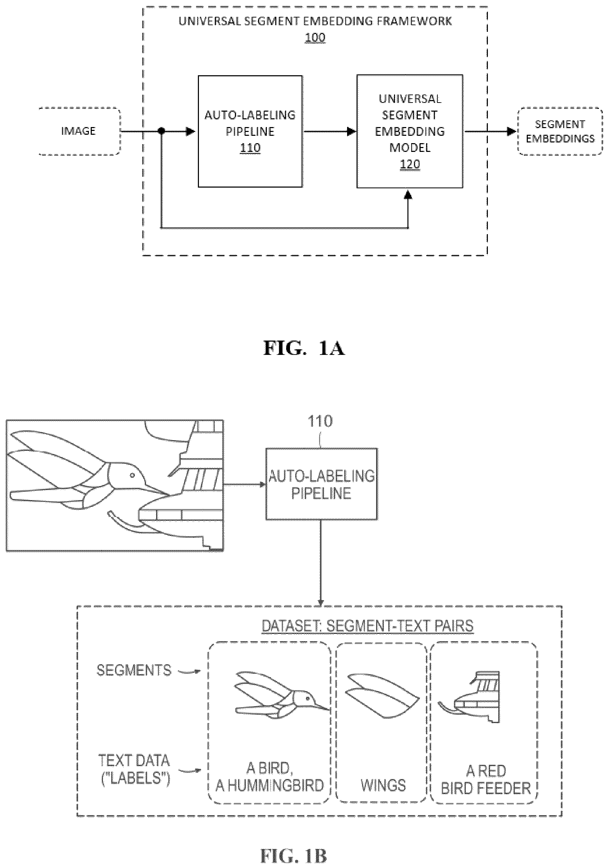

FIG. 1A is a block diagram that shows aspects of the Universal Segment Embedding (USE) framework 100 according to an example embodiment. This USE framework 100 includes two key components: 1) a scalable auto-labeling pipeline 110 that efficiently curates a large amount of segment-text pairs at various granularities, and 2) a USE model 120 that performs precise segment classification into a vast range of text-defined categories. Specifically, the auto-labeling pipeline 110 generates diverse and sufficiently accurate labeled segments. The auto-labeling pipeline 110 lays a solid foundation for the USE model 120 to learn abstract knowledge of various visual concepts. The USE model 120 is configured to help open-vocabulary image segmentation and also facilitate other downstream tasks (e.g., querying and ranking). More specifically, the USE model 120 is configured to take an image and various segments as input and generate an embedding vector for each segment that aligns with its corresponding text descriptions. These segment embeddings can then be utilized for classifying the segments in a zero-shot manner, similar to the CLIP model used for image classification.

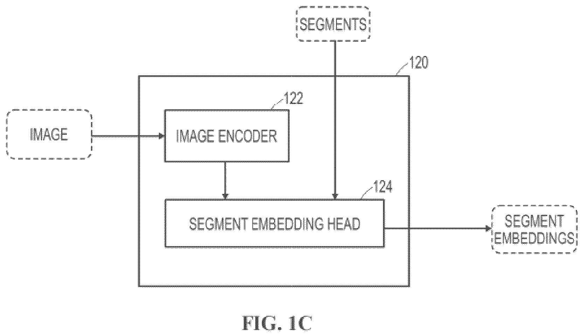

As an overview, the USE framework 100 is configured with a data-centric approach. The USE framework 100 includes a scalable auto-labeling pipeline 110 (FIG. 1B), which is configured to autonomously generate segment-text pairs at various granularities without human annotations. In addition, the USE framework 100 includes a lightweight USE model (FIG. 1C), which is trained efficiently on the large scale of segment-text pairs. Through rigorous experimental studies on semantic segmentation and part segmentation benchmarks, the USE framework 100 has been demonstrated to achieve consistent and substantial performance improvements over state-of-the-art methods (TABLE 1).

FIG. 1B is a flow diagram that shows aspects of the auto-labeling pipeline 110 according to an example embodiment. Training data with a large scale of high-quality segment-text pairs plays an indispensable role in achieving a high-performing USE model 120. Powered with a data-centric approach, the auto-labeling pipeline 110 leverages a set of vision or vision-language foundation models to extract segment-text pairs from unlabeled images. Given an image, the auto-labeling pipeline 110 starts by generating detailed descriptions of the objects and parts of the image with a Multimodal Large Language Model (MLLM). The auto-labeling pipeline 110 then detects the most relevant bounding box for each object/part with a phrase grounding model 114. The segments of the objects and parts are then generated based on the bounding boxes to collect segment-text pairs.

As a non-limiting example, FIG. 1B illustrates a dataset or a set of data pairs, which the auto-labeling pipeline 110 generates upon receiving an unlabeled digital image as input. In this case, the digital image displays a bird at a birdfeeder. The auto-labeling pipeline 110 is configured to generate a set of data pairs (e.g., "segment-text" pairs) using the digital image. In this example, the auto-labeling pipeline 110 is configured to generate a set of data pairs that include at least (i) an image segment of the bird and corresponding text data including a first label of "a bird" and a second label of "a hummingbird" to describe the same image segment of the bird, (ii) an image segment of the wings of the bird and corresponding text data of a label of "wings," and (iii) an image segment of the bird feeder and corresponding text data of a label of "a red bird feeder." As shown in this example, the auto-labeling pipeline 110 automatically generates one or more object segments (e.g., image segment of bird, image segment of bird feeder, etc.) as image segments along with corresponding object data (e.g., "a bird," "a hummingbird," "a red bird feeder," etc.) as text data. In addition, the auto-labeling pipeline 110 automatically generates part segments (e.g., wings) as image segments and corresponding part data (e.g., "wings") as text data. In this regard, the part segments and part data refer to particular features of the object segments and object data.

FIG. 1C is a flow diagram that shows aspects of the USE model 120 according to an example embodiment. The USE model 120 leverages the capabilities of pre-trained foundation models with minimal trainable parameters. The USE model 120 includes at least (i) an image encoder 122 that is adapted from pre-trained vision foundation models and (ii) a lightweight segment embedding head 124 that generates segment embeddings for input segments. The image encoder 122 is configured to generate output, which may be reused with different segments. The lightweight segment embedding head 124 is configured to generate embeddings efficiently. With the auto-labeling pipeline 110 and the USE model 120, the USE framework 100 achieves state-of-the-art performance while also being flexible in handling different open-vocabulary recognition tasks.

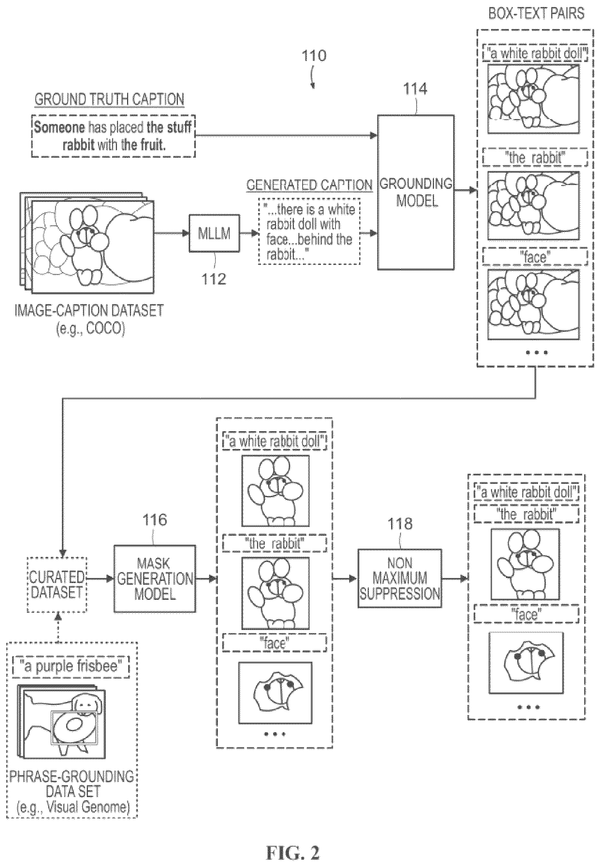

FIG. 2, FIG. 3, and FIG. 4 are flow diagrams that illustrate aspects of the auto-labeling pipeline 110 and the generation of the segment-text pairs. The auto-labeling pipeline 110 is configured to automatically curate segment-text pairs whose semantics are closely aligned. The auto-labeling pipeline 110 is scalable. The auto-labeling pipeline 110 is configured such that both the segments and texts encapsulate information at multiple levels of granularity, with the purpose of enhancing the open-vocabulary recognition ability of the USE model 120.

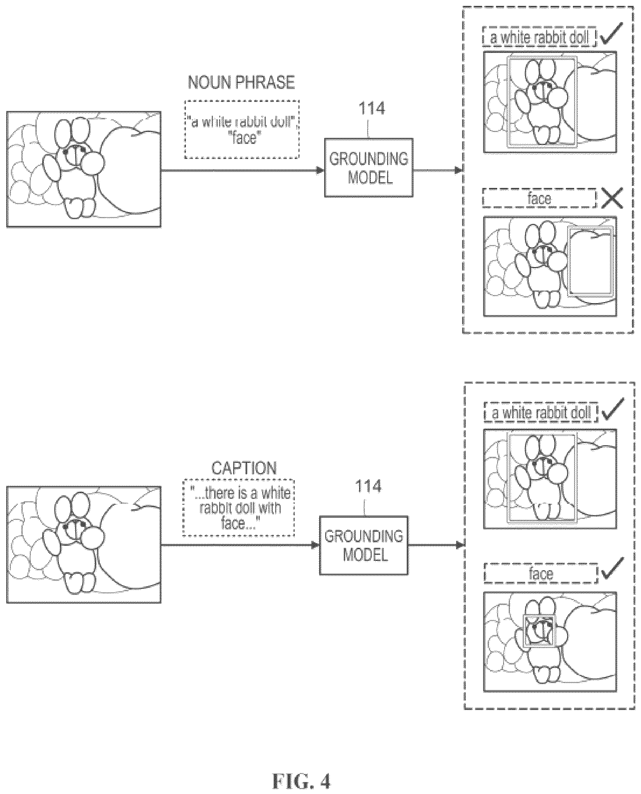

The auto-labeling pipeline 110 is configured to be generalized to curate data from multiple types of data sources including image-only datasets (e.g., CIFAR-100), image-caption datasets (e.g., COCO, SBU, and CC3M), and image with phrase grounding boxes (e.g., Visual Genome). The auto-labeling pipeline 110 curates data from different types of data sources while taking advantage of multiple foundation models to streamline the process. For instance, in FIG. 2, the auto-labeling pipeline 110 collects training data from two datasets including COCO and Visual Genome (VG). This unified auto-labeling pipeline 110 consolidates the segment-text pairs extracted from different image datasets and generates a collection of segments for each image, where each segment may have multiple text descriptions associated with it. More importantly, this auto-labeling pipeline 110 is fully automatic and can be easily scaled up to billions of images. Also, as shown in FIG. 2, in an example embodiment, the auto-labeling pipeline 110 comprises at least (a) an image captioning module, which includes MLLM 112 and which generates detailed descriptions (e.g., captions) of the image at different levels of granularity, (b) a referring expression grounding module, which includes grounding model 114 and which produces box-text pairs based on the images and captions as shown in FIG. 4, and (c) a mask generation module, which includes mask generation model 116 and which converts box-text pairs into segment-text pairs.

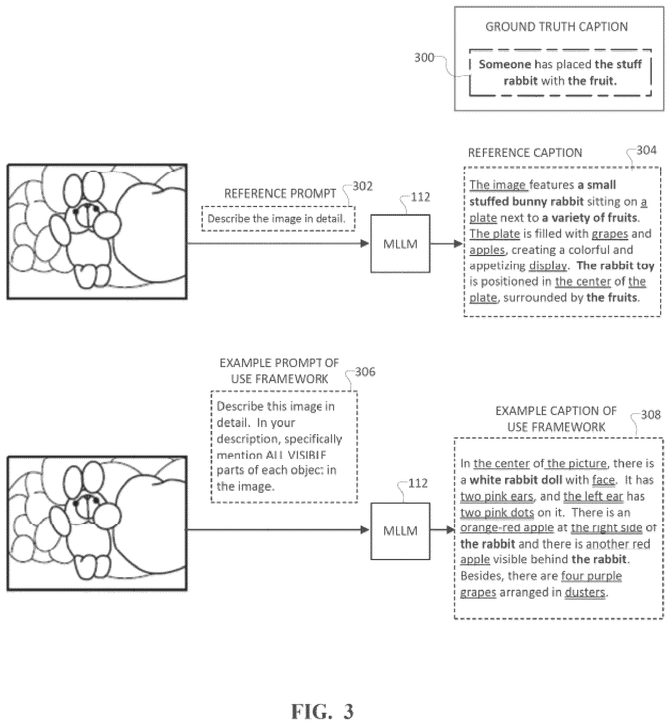

Referring to FIG. 2, the auto-labeling pipeline 110 starts with generating descriptions (e.g., captions) of objects (or parts) as well as their attributes from images. The quality and diversity of the descriptions play an important role in extracting segment-text pairs that cover objects in images as much as possible. For example, web-crawled captions or human-generated image captions (e.g., COCO, SBU, CC3M) lack descriptions about object attributes and/or only focus on the main objects in the image, as demonstrated by an example of the ground-truth caption 300 of FIG. 3. In contrast, the auto-labeling pipeline 110 is configured to generate image captions with richer semantic information. More specifically, as an example, the auto-labeling pipeline 110 leverages the recent advances of MLLMs (e.g., CogVLM, Kosmos-2, and LLaVA). In an example embodiment, and in an experimental study, CogVLM is employed as the MLLM for generating multi-granularity captions. In this regard, the auto-labeling pipeline 110 is configured to generate MLLM-augmented captions, as shown in FIG. 3.

For all the MLLMs, the design of the text prompt is important for guiding the MLLMs to generate captions with desired properties. For example, in order to obtain detailed descriptions of objects and parts in images, the auto-labeling pipeline 110 includes prompting the MLLMs with the following example prompt 306, which allows MLLMs to describe the objects along with their attributes while also mentioning all visible parts of each object presented in the digital image. This example prompt 306 guides the MLLM to generate captions with more fine-grained object parts.

EXAMPLE PROMPT: "Describe this image in detail. In your description, specifically mention ALL VISIBLE parts of each object in the image."

Referring to FIG. 3, as an example, the MLLM 112 generates a more detailed caption 308 via the example prompt 306 compared to caption 300 and caption 304, respectively. In particular, the detailed caption 308 specifically mentions "face" and "two pink ears" with respect to the rabbit along with detailed descriptions of the color (e.g., "orange-red") of the apple and descriptions of the grapes. In contrast, the MLLM 112 generates a brief reference caption 304 via the reference prompt 302 (i.e., "Describe the image in detail."). That is, the example prompt 306 enables the MLLM 112 to generate a detailed caption 308 with fine-grained details about the image whereas the reference prompt 302 generates a brief caption 304 that does not include these fine-grained details. Also, with respect to the notation in FIG. 3, the bold font is indicative of noun phrases found in at least the ground-truth caption 300. The single underlined font is indicative of noun phrases found in at least the reference caption 304 that is generated using the reference prompt 302. The double underlined font is indicative of noun phrases found only in the example caption 308 that is generated using the example prompt of the auto-labeling pipeline 110. In this regard, as shown in FIG. 3, by using the example prompt 306, the MLLM 112 is configured to generate a detailed caption 308 that includes noun phrases of the ground truth caption 300 and noun phrases of the reference caption 304, as well as additional noun phrases. In this regard, the USE framework 100 leverages MLLMs 112 to infuse more informative visual concepts into captions describing images. Furthermore, the USE framework 100 augments image captions by meticulously requesting descriptions of all visible parts of objects in the image, thereby enriching the semantics of captions at multiple levels of granularity.

Next, given the captions from different sources (i.e., ground-truth captions and MLLM-generated captions), the auto-labeling pipeline 110 includes extracting referring expressions from the captions and identifying their corresponding image regions represented by bounding boxes. The auto-labeling pipeline 110 includes first extracting the noun phrases using spaCy and then expanding the noun phrases as referring expressions. For instance, as a non-limiting example, from a caption ("There is an orange-red apple at the right side of the rabbit and there is another red apple visible behind the rabbit."), the auto-labeling pipeline 110 includes obtaining the noun phrases ("an orange red apple", "the right side", "the rabbit", "another red apple"). The auto-labeling pipeline 110 includes further expanding the noun phrases to referring expressions by recursively traversing the children of noun phrases in the dependency tree and concatenating them. For the above example, the referring expressions, obtained after expanding noun phrases, are "an orange-red apple", "the right side of the rabbit", "the rabbit", "another red apple visible behind the rabbit." Clearly, referring expressions captures more context information regarding the objects.

Existing open-vocabulary segmentation models that contain segment-text curation pipelines have a limited understanding of the text, either only including nouns (e.g., "apple", "side", "rabbit") from the caption, or including adjectives and nouns separately (e.g., "apple", "side", "rabbit", "orange-red", "red", "visible", "right"). In contrast to these other approaches, the auto-labeling pipeline 110 includes curating training data that encapsulates richer semantics to enhance open-vocabulary recognition abilities and to achieve greater consistency between the predicted segments and the text query.

In order to obtain the bounding boxes associated with the extracted referring expressions, the auto-labeling pipeline 110 employs open-vocabulary grounding models 114 (e.g., Grounding DINO and CoDet). Although some of the MLLMs also offer the grounding capability, such MLLMs appear to generate bounding boxes that are less accurate than those generated by specialized grounding models. In this regard, as an example, the auto-labeling pipeline 110 uses Grounding Dino.

Given the image caption, there are two approaches to collecting bounding boxes associated with the noun phrases: (i) querying with the noun phrases individually or (ii) querying with the entire caption and then matching the boxes with the phrases. In general, a noun phrase may refer to a group of two or more words that consist of a noun and its modifiers. In an example embodiment, the auto-labeling pipeline 110 includes querying with the entire caption, as this approach allows the grounding model 114 to capture the comprehensive referring relationships implicitly encapsulated in the caption. In particular, when querying for object parts, the context is extremely important. In this regard, querying with the entire caption enables object parts to be accurately identified via context information. For example, as shown in FIG. 4, the rabbit face is accurately located when querying with the entire caption, while the face is mistakenly assigned with a bounding box containing the apple if the noun phrase "face" alone is used for the query. Hence, the auto-labeling pipeline 110 includes querying the grounding model 114 with the entire caption and matching the boxes with the phrases. Specifically, for each predicted box, the auto-labeling pipeline 110 includes first identifying the token with the highest probability score and associating the box with the noun phrase that contains the identified token. Next, the auto-labeling pipeline 110 includes generating a collection of box-text pairs. Also, the auto-labeling pipeline 110 includes extending box-phrase pairs to box-expression pairs and storing both because the description of an image region may be ambiguous and from multiple levels of detail.

Referring to FIG. 2, given the box-text pairs generated by the referring expression grounding model 114 mentioned above or directly from human annotations (e.g., Visual Genome), the next step is to convert the bounding boxes into masks. The image segmentation model SAM takes a bounding box as a prompt and outputs the mask of the best object that tightly fits with the box. For each box, the SAM will generate multiple masks, and the auto-labeling pipeline 110 includes only choosing the one with the highest stability score (predicted by the SAM). Similar to SAM, the auto-labeling pipeline 110 includes two post-processing steps over the chosen masks including filling the small holes and removing the isolated small components. Recognizing that for some text with vague meanings (e.g., a room, the atmosphere), there may be bounding boxes cover the entire image. In this case, the auto-labeling pipeline 110 includes directly using the mask of the entire image as the corresponding segments without using SAM. Then, a collection of segment-text pairs can be obtained and merged via mask-based non-maximum-suppression (NMS) 118. The auto-labeling pipeline 110 includes NMS 118 to remove duplicate masks for each image because different text descriptions may refer to the same object in the image. After NMS 118, all the text descriptions associated with the duplicate masks will be merged and assigned to the corresponding mask.

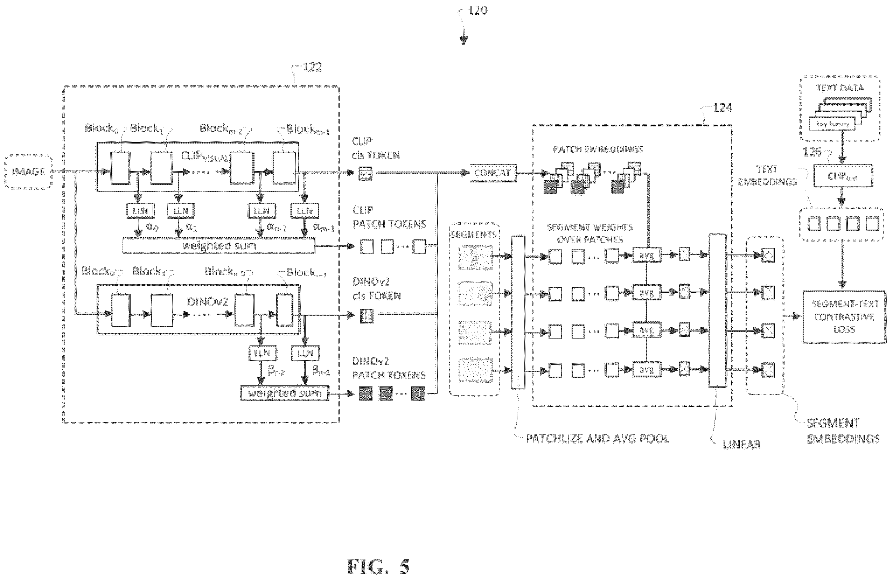

FIG. 5 is a diagram of an architecture of the USE model 120, which leverages the capabilities of pre-trained foundation models (i.e., CLIP and DINOv2) with minimal trainable parameters. The USE model 120 includes at least a) an image encoder 122 that extracts image features by adapting the pre-trained foundation models, and b) a segment embedding head 124 that generates segment embeddings based on the input segments and maps the segment embeddings to the vision-language space.

Given an input image x, the image encoder 122 exploits pretrained vision transformers (ViTs) to extract patch embeddings $z \in \mathbb{R}^{N \times D}$, where $N$ is the number of image patches and $D$ is the embedding dimension. To capture local features from image patches for the segmentation task, the image encoder 122 uses the multi-level feature merging introduced in COMM, which uses both CLIP and DINOv2 to extract the embeddings. Specifically, given an image encoding network (e.g., $CLIP_{visual}$ of the CLIP model) and an input image x, the image encoder 122 extracts patch embeddings from all transformer blocks $CLIP_{visual}(x) = [c^0, c^1, \ldots, c^{m-1}]$, where $m$ is the number of transformer blocks. To align embeddings from different blocks, the image encoder 122 applies a linear-layernorm module (LLN) to patch embeddings of each block. The LLN is a layer norm layer followed by a linear layer. Then, the image encoder 122 merges the patch embeddings from different blocks by weighted sum $\bar{c}$, as expressed in equation 1. In equation 1, the block scales $\alpha_i$ are learned during training. The DINOv2 patch embeddings $\bar{d}$ are also extracted with the same approach using an image encoding network of DINOv2. The image encoder 122 only extracts patch embeddings from the last $l$ blocks of DINOv2 because the shallow features lead to significant performance degradation. Hence, the DINOv2 patch embeddings $\bar{d}$ are expressed in equation 2. In order to capture global image features, the image encoder 122 also obtains the image embeddings from the *cls* tokens of CLIP and DINOv2, denoted as $\hat{c}$ and $\hat{d}$. In the end, the output of the image encoder 122 is the patch-wise concatenation of the extracted embeddings as $z = [\bar{c}, \hat{c}, \bar{d}, \hat{d}]$. In the image encoder 122, both CLIP and DINOv2 are frozen during training and are not updated with back-propagation. The only trainable parameters in the image encoder 122 are the LLN modules and the block scales (i.e., $\alpha_i$ and $\beta_i$).

$$\bar{c} = \sum_{i=0}^{m-1} \alpha_i \cdot LLN\left( c^i \right) \qquad\qquad [1]$$

$$\bar{d} = \sum_{i=n-l}^{n-1} \beta_i \cdot LLN(d^i) \qquad\qquad [2]$$

Given arbitrary segments as prompt, the segment embedding head 124 aims to extract segment embeddings from the patch embeddings $z$ and map them to the joint space of vision and language. Specifically, given a segment $s$, the segment embedding head 124 first performs average pooling over the patches to obtain the weights of the segment within each patch. Then, the segment embedding head 124 uses these weights to compute the weighted average of the patch embeddings. Finally, the average embedding is mapped to the vision-language space with a linear layer and serves as the segment embedding s. The segment embedding head 124 has a linear layer, which has trainable parameters and which outputs the segment embeddings. Also, in FIG. 5, the segment embedding head 124 uses simple mask pooling and linear projection, which are lightweight and cost-effective to train over a large scale of segment-text pairs. In other embodiments with more sophisticated designs, the segment embedding head 124 may include a prompt encoder and cross attention.

After obtaining the segment embeddings $s_{0,1,\ldots,k-1}$ of a set of segments, the USE model 120 computes the text embeddings $t_{0,1,\ldots,k-1}$ of the corresponding texts. For example, during training, as shown in FIG. 5, the USE model 120 employs a text encoding network 126 (e. g., $CLIP_{text}$ of the CLIP model) to generate the text embeddings. Next, the USE model 120 uses the segment-text contrastive loss to train the model as expressed in equation 3, where $\tau$ is the temperature parameter that scales the logits. In this regard, a segment may correspond to multiple text descriptions in the training data. At each training iteration, the USE model 120 randomly samples a text description for each segment in the mini-batch to compute the text embedding.

$$L = -\frac{1}{2k}\sum_{i=0}^{k-1}\left[\log\frac{\exp(s_i \cdot {}^{t_i}/_\tau)}{\sum_{j=0}^{k-1}\exp(s_i \cdot {}^{t_j}/_\tau)} + \log\frac{\exp(s_i \cdot {}^{t_i}/_\tau)}{\sum_{j=0}^{k-1}\exp(s_j \cdot {}^{t_i}/_\tau)}\right] \qquad\qquad [3]$$

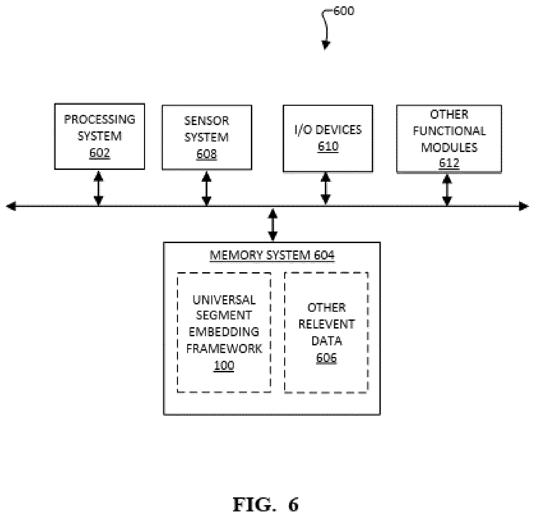

FIG. 6 is a diagram of an example of a system 600, which is configured to perform the process of the USE framework 100 (FIG. 1). The system 600 includes at least a processing system 602 with at least one processing device. For example, the processing system 602 may include an electronic processor, a central processing unit (CPU), a graphics processing unit (GPU), a tensor processing unit (TPU), a microprocessor, a field-programmable gate array (FPGA), an application-specific integrated circuit (ASIC), processing technology, or any number and combination thereof. The processing system 602 is operable to provide the functionalities as disclosed herein.

The system 600 includes a memory system 604, which is operatively connected to the processing system 602. In this regard, the processing system 602 is in data communication with the memory system 604. In an example embodiment, the memory system 604 includes at least one non-transitory computer readable storage medium, which is configured to store and provide access to various data to enable at least the processing system 602 to perform the operations and functionalities, as disclosed herein. In an example embodiment, the memory system 604 comprises a single memory device or a plurality of memory devices. The memory system 604 may include electrical, electronic, magnetic, optical, semiconductor, electromagnetic, or any suitable storage technology. For instance, in an example embodiment, the memory system 604 may include random access memory (RAM), read only memory (ROM), flash memory, a disk drive, a memory card, an optical storage device, a magnetic storage device, a memory module, any suitable type of memory device, or any number and combination thereof.

The memory system 604 includes at least USE framework 100 stored thereon. As aforementioned, the USE framework 100 includes at least the auto-labeling pipeline 110 and the USE model 120. In addition, the memory system 604 includes other relevant data 606, which are stored thereon. Each of the USE framework 100 and the other relevant data 606 includes computer readable data with instructions, which, when executed by the processing system 602, is configured to perform the functions as disclosed herein. The computer readable data may include instructions, code, routines, various related data, any software technology, or any number and combination thereof. The USE framework 100 is configured to generate segment embeddings based on a digital image. Meanwhile, the other relevant data 606 provides various computer readable data and/or software technology (e.g., operating system, training data, etc.), which enables the system 600 to perform the functions as discussed herein.

The system 600 is configured to include at least one sensor system 608. The sensor system 608 includes one or more sensors. For example, the sensor system 608 includes at least an image sensor. The sensor system 608 may also include one or more other sensors (e.g., a camera, a depth sensor, a radar sensor, a light detection and ranging (LIDAR) sensor, a thermal sensor, an ultrasonic sensor, an infrared sensor, a motion sensor, an audio sensor, etc. The sensor system 608 is operable to communicate with one or more other components (e.g., processing system 602 and memory system 604). For example, the sensor system 608 may provide sensor data, which is then used by the processing system 602 to generate digital image data based on the sensor data. In this regard, the processing system 602 is configured to obtain the sensor data as digital image data directly or indirectly from one or more sensors of the sensor system 608. The sensor system 608 is local, remote, or a combination thereof (e.g., partly local and partly remote). Upon receiving the sensor data, the processing system 602 is configured to process this sensor data (e.g. image data) in connection with the USE framework 100, the other relevant data 606, or any number and combination thereof.

In addition, the system 600 may include at least one other component. For example, the system 600 includes one or more I/O devices 610 (e.g., display device, microphone, speaker, etc.). Also, the system 600 includes other functional modules 612, such as any appropriate hardware, software, or combination thereof that assist with or contribute to the functioning of the system 600 and the USE framework 100 as discussed in this disclosure. For example, the other functional modules 612 include communication technology (e.g., wired communication technology, wireless communication technology, or a combination thereof) that enables components of the system 600 to communicate with each other as described herein. Also, the other functional modules 612 may include one or more other systems.

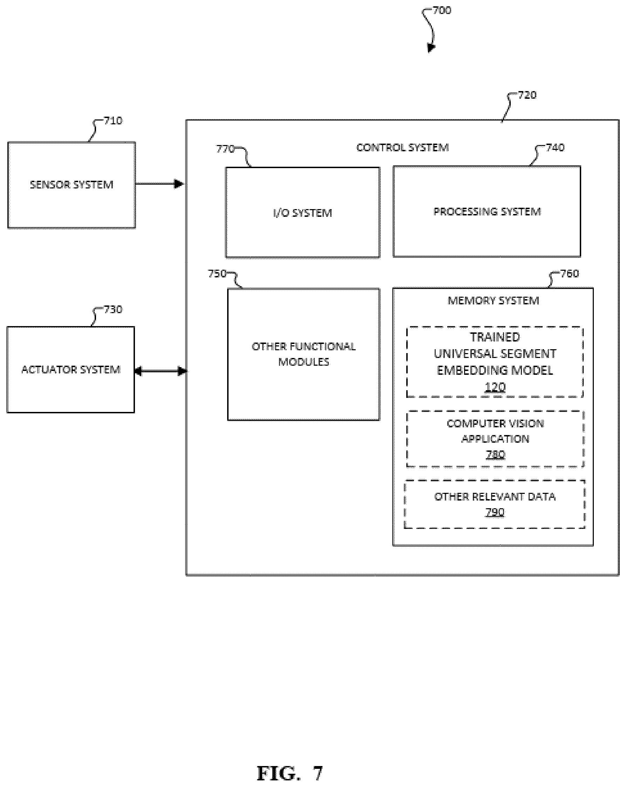

FIG. 7 is a diagram of a system 700, which includes the trained USE model 120 for semantic segmentation. In this example, the system 700 is includes at least a sensor system 710, a control system 720, and an actuator system 730. The system 700 is configured such that the control system 720 controls the actuator system 730 based on sensor data from the sensor system 710. More specifically, the sensor system 710 includes one or more sensors and/or corresponding devices to generate sensor data. For example, the sensor system 710 includes an image sensor, a camera, a radar sensor, a light detection and ranging (LIDAR) sensor, a thermal sensor, an ultrasonic sensor, an infrared sensor, a motion sensor, a satellite-based navigation sensor (e.g., Global Positioning System (GPS) sensor), an optical sensor, an audio sensor, any suitable sensor, or any number and combination thereof. Upon obtaining detections from the environment, the sensor system 710 is operable to communicate with the control system 720 via an input/output (I/O) system 770 and/or other functional modules 750, which includes communication technology.

The control system 720 is configured to obtain the sensor data directly or indirectly from one or more sensors of the sensor system 710. In this regard, the sensor data may include sensor data from a single sensor or sensor-fusion data from a plurality of sensors. Upon receiving input, which includes at least sensor data, the control system 720 is operable to process the sensor data via the processing system 740. In this regard, the processing system 740 includes at least one processor. For example, the processing system 740 includes an electronic processor, a CPU, a GPU, a microprocessor, an FPGA, an ASIC, processing circuits, any suitable processing technology, or any combination thereof. Upon processing at least this sensor data, the processing system 740 is configured to extract, generate, and/or obtain proper input data (e.g., digital image data) for the trained USE model 120. In addition, the processing system 740 is operable to generate output data (e.g., semantic segmentation data with respect to objects displayed in digital images) via the trained USE model 120 based on communications with the memory system 760. In addition, the processing system 740 is operable to provide actuator control data to the actuator system 730 based on the output data, semantic segmentation data, and/or object recognition data.

The memory system 760 is a computer or electronic storage system, which is configured to store and provide access to various data to enable at least the operations and functionality, as disclosed herein. The memory system 760 comprises a single device or a plurality of devices. The memory system 760 includes electrical, electronic, magnetic, optical, semiconductor, electromagnetic, any suitable memory technology, or any combination thereof. For instance, the memory system 760 may include RAM, ROM, flash memory, a disk drive, a memory card, an optical storage device, a magnetic storage device, a memory module, any suitable type of memory device, or any number and combination thereof. In an example embodiment, with respect to the control system 720 and/or processing system 740, the memory system 760 is local, remote, or a combination thereof (e.g., partly local and partly remote). For example, the memory system 760 may include at least a cloud-based storage system (e.g. cloud-based database system), which is remote from the processing system 740 and/or other components of the control system 720.

The memory system 760 includes at least the trained USE model 120, which is executed via the processing system 740. The trained USE model 120 is configured to receive or obtain input data, which includes at least one digital image. In addition, the trained USE model 120, via the processing system 740, is configured to generate segment embeddings based on the at least one digital image. In addition, the memory system 760 includes a computer vision application 780, which includes computer readable data including instructions that generates semantic segmentation data based on the segment embedding data of the trained USE model 120 to provide a number of computer vision services for the control system 720. The computer vision application 780 works with the trained USE model 120 to provide a number of computer vision services (e.g., object/part/subpart recognition, querying tasks, ranking tasks,) to the control system 720 so that the control system 720 may control the actuator system 730 according to the computer vision services. The memory system 760 is also configured to store other relevant data 790, which relates to the operation of the system 700 in relation to one or more components (e.g., sensor system 710, the actuator system 730, etc.).

Furthermore, as shown in FIG. 7, the system 700 includes other components that contribute to operation of the control system 720 in relation to the sensor system 710 and the actuator system 730. Also, as shown in FIG. 7, the control system 720 includes the I/O system 770, which includes one or more interfaces for one or more I/O devices that relate to the system 700. For example, the I/O system 770 provides at least one interface to the sensor system 710 and at least one interface to the actuator system 730. Also, the control system 720 is configured to provide other functional modules 750, such as any appropriate hardware technology, software technology, or any combination thereof that assist with and/or contribute to the functioning of the system 700. For example, the other functional modules 750 include an operating system and communication technology that enables components of the system 700 to communicate with each other as described herein. With at least the configuration discussed in the example of FIG. 7, the system 700 is applicable in various technologies.

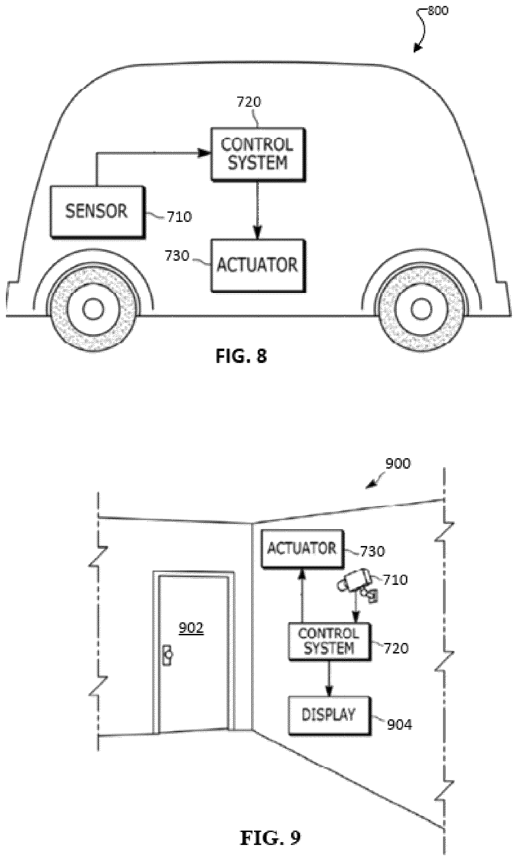

FIG. 8 is a diagram of the system 700 with respect to mobile machine technology 800 according to an example embodiment. As a non-limiting example, the mobile machine technology 800 includes at least a partially autonomous vehicle or mobile robot. In FIG. 8, the mobile machine technology 800 is at least a partially autonomous vehicle, which includes a sensor system 710. The sensor system 710 includes an optical sensor, an image sensor, a video sensor, an ultrasonic sensor, a position sensor (e.g. GPS sensor), a radar sensor, a LIDAR sensor, any suitable sensor, or any number and combination thereof. One or more of the sensors may be integrated with respect to the vehicle. The sensor system 710 is configured to provide sensor data to the control system 720.

The control system 720 is configured to obtain or generate image data, which is based on sensor data or sensor-fusion data from the sensor system 710. In addition, the control system 720 is configured to pre-process the sensor data to provide input data of a suitable form (e.g., digital image data) to the trained USE model 120. The trained USE model 120 is advantageously configured to generate segment embedding data. The computer vision application 780 is configured to generate semantic segmentation data based on the segment embedding data such that objects displayed in the sensor data may be detected and recognized.

In addition, the control system 720 is configured to generate actuator control data, which is based at least on output data (e.g. semantic segmentation data, object identification data, etc.) of the trained USE model 120 in accordance with the computer vision application 780. In this regard, the control system 720 is configured to generate actuator control data that allows for safer and more accurate control of the actuator system 730 of the vehicle by the improved semantic segmentation provided by the multiple levels of granularity provided by the segment embedding data, which is generated by the trained USE model 120. The actuator system 730 may include a braking system, a propulsion system, an engine, a drivetrain, a steering system, or any number and combination of actuators of the vehicle. The actuator system 730 is configured to control the vehicle so that the vehicle follows rules of the roads and avoids collisions based at least on the output data (e.g. semantic segmentation data) that is generated based on the segment embedding data, which is generated via the trained USE model 120, in response to receiving one or more digital images based on the sensor data.

FIG. 9 is a diagram of the system 700 with respect to security technology 900 according to an example embodiment. As a non-limiting example, the security technology 900 includes at least a monitoring system, a control access system, a surveillance system, or any suitable type of security apparatus. For instance, as one example, FIG. 9 relates to security technology 900, which is configured to physically control a locked state and an unlocked state of a lock of the door 902 via the actuator system 730 and display an enhanced image/video on the display technology 904. The security technology 900 may also trigger an alarm and/or provide electronic notifications to other communication devices/technologies. In this example, the sensor system 710 includes at least an image sensor that is configured to provide image/video data. The sensor system 710 may also include other sensors, such as a motion sensor, infrared sensor, etc.

The control system 720 is configured to obtain the image/video data from the sensor system 710. The control system 720 is also configured generate semantic segmentation data via the segment embedding data, which is output by the trained USE model 120 upon receiving image/video data from the sensor system 710. In addition, the control system 720 is configured to generate actuator control data that allows for safer and more accurate control of the actuator system 730 for the door 902 by using output data (e.g., semantic segmentation data), which is based on segment embedding data generated via the trained USE model 120. The control system 720 is configured to display any data relating to the computer vision application 780, or any number and combination thereof on the display technology 904.

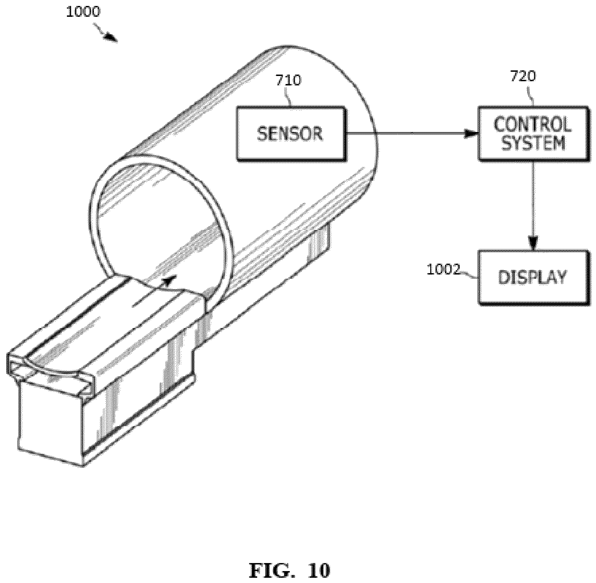

FIG. 10 is a diagram of the system 700 with respect to imaging technology 1000 according to an example embodiment. As a non-limiting example, the imaging technology 1000 includes a magnetic resonance imaging (MRI) apparatus, an x-ray imaging apparatus, an ultrasonic apparatus, a medical imaging apparatus, any suitable type of imaging apparatus, or any number and combination thereof. In FIG. 10, the sensor system 710 includes at least one image sensor. The control system 720 is configured to obtain image data from the sensor system 710. The control system 720 is also configured to generate semantic segmentation data based on segment embeddings generated via the trained USE model 120. In addition, the control system 720 is configured to provide semantic segmentation data and object detection/recognition data with respect to the image data of the sensor system 710. In addition, the control system 720 is configured to display the any relevant data (e.g., sensor data, any data relating to the computer vision application 780, or any number and combination thereof) on the display 1002.

As discussed, the USE framework 100 provides a number of advantages and benefits. The USE framework 100 is a novel open-vocabulary image segmentation framework. The USE framework 100 includes the scalable auto-labeling pipeline 110, which automatically curates large-scale segment-text pairs with fine-grained object descriptions at multiple levels of granularities. Unlike another system, such as VLPart, that is first trained on human-annotated part data (e.g., Pascal Part), the USE framework 100 is trained on training datasets (e.g., COCO datasets), which do not contain any human-annotated part segments. In addition, the USE framework 100 includes the USE model 120, which generates segment embeddings that are aligned with text embeddings in the joint space of vision and language. By integrating a scalable auto-labeling pipeline 110 and a lightweight USE model 120, the USE framework 100 effectively classifies image segments in a zero-shot manner without human annotations. The USE framework 100 leverages pre-trained foundation models. The USE framework 100 is optimized for efficiency and scalability.

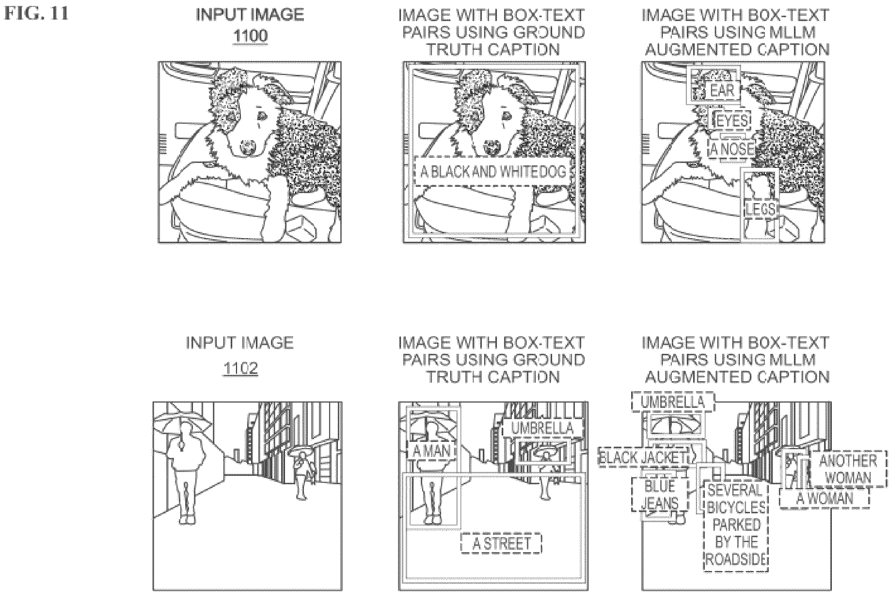

FIG. 11 illustrates some non-limiting examples to highlight some advantages of the auto-labeling pipeline 110. More specifically, FIG. 11 provides a qualitative comparison of box-text pairs extracted from ground truth captions and MLLM-augmented captions of the auto-labeling pipeline 110. As shown in FIG. 11, the auto-labeling pipeline 110 is configured to generate more fine-grained objects and parts via MLLM-augmented captions (e.g., FIG. 3) compared with ground truth captions. For example, in FIG. 11, the image 1100 displays a dog sitting on a seat in a vehicle. With the ground-truth caption, the grounding model 114 generates only one box-text pair that includes a bounding box for the dog and corresponding text of "a black and white dog" without providing any details regarding parts of the dog. In contrast, with the MLLM augmented caption that is generated using the example prompt, the grounding model 114 generates a set of box-text pairs with greater details of the dog that include (i) a bounding box for the ear of the dog and corresponding text of "ear," (ii) a bounding box for the eye of the dog and corresponding text of "eyes," (iii) a bounding box for the nose of the dog and corresponding text of "nose," and (iv) a bounding box for the leg of the dog and corresponding text of "legs."

As another example, in FIG. 11, the image 1102 displays people with umbrellas as they are walking along a street in the city. With the ground-truth caption, the grounding model 114 generates a set of box-text pairs that include (i) a bounding box for the man and corresponding text of "man," (ii) a bounding box for the street and corresponding text of "a street," and (iii) a bounding box for the red umbrella and corresponding text of "umbrella." In contrast, with the MLLM augmented caption that is generated using the example prompt, the grounding model 114 generates a set of box-text pairs with greater details of this scene that include (i) a bounding box for the man's blue umbrella and corresponding text of "umbrella," (ii) a bounding box for the man's jacket and corresponding text of "black jacket," (iii) a bounding box for man's pants and corresponding text of "blue jeans," (iv) a bounding box for a woman and corresponding text of "a woman," (v) a bounding box for another woman and corresponding text of "another woman," and (vi) a bounding box for bicycles and corresponding text of "several bicycles parked by the roadside." As demonstrated by these examples involving image 1100 and image 1102, the generation of these box-text pairs via MLLM augmented captions (e.g., FIG. 2 and FIG. 3) translates into the USE model 120 producing segmentation embeddings that will further result in various granularities of semantic segmentation data.

In addition, the USE framework 100 outperforms other two-stage methods by a large margin on a number of datasets. TABLE 1 provides information relating to open-vocabulary semantic segmentation benchmarks measured by mean intersection over union (mIoU). As shown in TABLE 1, for example, the USE framework 100 achieves the best average performance compared with the other methods by a significant margin across the datasets. TABLE 1 is based on segment-text pairs from COCO images including the annotations from VG. In TABLE 1, **COCO**† denotes the usage of all segment-text pairs from COCO images including the annotations from VG.

TABLE 1

| Method | Type | Training Data | VL-Model | ADE-150 | ADE-847 | PC-59 | PC-459 | Average |
|---|---|---|---|---|---|---|---|---|
| LSeg+ | end2end | COCO | ALIGN EN-B7 | 18.0 | 3.8 | 46.5 | 7.8 | 19.0 |
| ZegFormer | end2end | COCO | CLIP ViT-B/16 | 16.4 | - | - | - | - |
| OpenSeg | end2end | COCO | ALIGN EN-B7 | 28.6 | 8.8 | 48.2 | 12.2 | 24.4 |
| ODISE | end2end | COCO | Stable Diffusion | 29.9 | 11.1 | 57.3 | 14.5 | 28.2 |
| SAN | end2end | COCO | CLIP ViT-L/14 | 32.1 | 12.4 | 57.7 | 15.7 | 29.4 |
| SimSeg | two-stage | COCO | CLIP ViT-L/14 | 21.7 | 7.1 | 52.2 | 10.2 | 22.8 |
| OVSeg | two-stage | COCO | CLIP ViT-L/14 | 29.6 | 9.0 | 55.7 | 12.4 | 26.6 |

(continued)

| Method | Type | Training Data | VL-Model | ADE-150 | ADE-847 | PC-59 | PC-459 | Average |
|---|---|---|---|---|---|---|---|---|
| **USE Framework 100** | **two-stage** | **COCO†** | **CLIP ViT-L/14** | **37.0** | **13.3** | **57.8** | **14.7** | **30.7** |
| USE Framework 100 | two-stage | COCO, VG | CLIP ViT-L/14 | 37.1 | 13.4 | 58.0 | 15.0 | 30.9 |

As an example, in TABLE 1, OVSeg refers to a mask-adapted CLIP that fine-tunes CLIP on a collection of masked image regions to produce mask-aware image embeddings. However, OVSeg fails to connect rich semantic information, such as object attributes, with the masked regions. OVSeg also has the limitation that the background information outside the masked region is completely ignored during the generation of segment embeddings. Unlike OVseg, the USE model 120 is configured to learn more expressive segment embeddings enriched with detailed text descriptions, including color, shape, size, etc. In addition, the segment embeddings generated by the USE model 120 takes the context information outside the masked region into account such that the referring relationships between objects can be clearly captured.

As aforementioned, the USE framework 100 provides a scalable auto-labeling pipeline 110 that autonomously generates high-quality segment-text pairs at various granularities without human annotations. The USE framework 100 includes a lightweight USE model 120 that generate high-quality segment embeddings, which are well-aligned with text descriptions. Hence, the USE model 120 enables various zero-shot image segmentation tasks such as semantic, instance, and part segmentation. In addition, the segment embeddings offer efficient querying of image segments by text. Furthermore, consistent and substantial gains are observed with the USE framework 100 over the state-of-the-art open-vocabulary image segmentation methods on different tasks including semantic and part segmentation.

Furthermore, the above description is intended to be illustrative, and not restrictive, and provided in the context of a particular application and its requirements. Those skilled in the art can appreciate from the foregoing description that the present invention may be implemented in a variety of forms, and that the various embodiments may be implemented alone or in combination. Therefore, while the embodiments of the present invention have been described in connection with particular examples thereof, the general principles defined herein may be applied to other embodiments and applications without departing from the spirit and scope of the described embodiments, and the true scope of the embodiments and/or methods of the present invention are not limited to the embodiments shown and described, since various modifications will become apparent to the skilled practitioner upon a study of the drawings, specification, and following claims. Additionally, or alternatively, components and functionality may be separated or combined differently than in the manner of the various described embodiments and may be described using different terminology. These and other variations, modifications, additions, and improvements may fall within the scope of the disclosure as defined in the claims that follow.

According to a further embodiment of the one or more non-transitory computer readable mediums the method further comprises:

generating, via a multimodal large language model, the caption using the digital image and a prompt,
wherein the prompt specifies that the caption mentions all visible parts of each object of the digital image.

According to a further embodiment of the one or more non-transitory computer readable mediums the step of generating the set of data pairs includes:

generating, via a grounding model, a box-text pair that includes a bounding box and corresponding text data for each image segment based on the digital image and the caption, each bounding box capturing a particular object or a particular part of the digital image; and
generating, via a mask generation model, a semantic mask for each image segment based on the digital image and the corresponding box-text pair.

According to a further embodiment of the one or more non-transitory computer readable mediums

the image encoder includes (i) a first encoding network of a first pretrained vision foundation model, the first encoding network generating a first set of patch embeddings using the digital image and (ii) a second encoding network of a second pretrained vision foundation model, the second encoding network generating a second set of patch embeddings using the digital image; and
the patch embeddings are a concatenation of the first set of patch embeddings and the second set of patch embeddings.

According to a further embodiment of the one or more non-transitory computer readable mediums

the image encoder includes at least (a) an encoding network from Contrastive Language-Image Pretraining (CLIP) having transformer blocks, and (b) Linear-LayerNorm (LLN) modules associated with the transformer blocks; and the trainable parameters include LLN parameters and block scales that are associated with the LLN modules.

According to a further embodiment of the one or more non-transitory computer readable mediums

the segment embedding head includes a linear layer that outputs the segment embeddings; and the trainable parameters include a set of parameters of the linear layer.

**Claims**

1. A computer-implemented method for semantic segmentation via a universal segmentation embedding (USE) model, the computer-implemented method comprising:

   receiving a digital image;
   generating a set of data pairs using the digital image and a caption describing the digital image, the set of data pairs including image segments and text data describing the image segments, the set of data pairs having different levels of granularity include (i) a first subset that includes object segments as the image segments and corresponding object data as the text data and (ii) a second subset that includes part segments as the image segments and corresponding part data as the text data, where the object segments correspond to objects and where the part segments correspond to specific features of the object segments;
   generating, via an image encoder, patch embeddings based on patches of the digital image;
   generating, via a segment embedding head, segment embeddings using the image segments and the patch embeddings;
   generating, via a text encoder, text embeddings based on the text data;
   generating contrastive loss using the segment embeddings and the text embeddings; and
   updating trainable parameters of the USE model based on the contrastive loss,
   wherein the USE model includes at least the image encoder and the segment embedding head.

2. The computer-implemented method of claim 1, further comprising:

   generating, via a multimodal large language model, the caption using the digital image and a prompt,
   wherein the prompt specifies that the caption mentions all visible parts of each object of the digital image.

3. The computer-implemented method of claim 1, wherein the step of generating the set of data pairs includes:

   generating, via a grounding model, a box-text pair that includes a bounding box and corresponding text data for each image segment based on the digital image and the caption, each bounding box capturing a particular object or a particular part of the digital image; and
   generating, via a mask generation model, a semantic mask for each image segment based on the digital image and the corresponding box-text pair.

4. The computer-implemented method of claim 1, wherein:

   the image encoder includes (i) a first encoding network of a first pretrained vision foundation model, the first encoding network generating a first set of patch embeddings using the digital image encoding network generating a second set of patch embeddings using the digital image; and
   the patch embeddings are a concatenation of the first set of patch embeddings and the second set of patch embeddings.

5. The computer-implemented method of claim 1, wherein:

   the image encoder includes (i) a first encoding network of a first pretrained vision foundation model, the first encoding network including a first set of transformer blocks, and (ii) a second encoding network of a second pretrained vision foundation model, the second encoding network including a second set of transformer blocks;

a first set of Linear-LayerNorm (LLN) modules are associated with the first set of transformer blocks;

a second set of LLN modules are associated with the second set of transformer blocks; and

the trainable parameters include a first set of LLN parameters that are associated with the first set of LLN modules and a second set of LLN parameters that are associated with the second set of LLN modules.

6. The computer-implemented method of claim 1, wherein:

the segment embedding head includes a linear layer that outputs the segment embeddings; and

the trainable parameters include a set of parameters of the linear layer.

7. The computer-implemented method of claim 1, further comprising:

generating semantic segmentation data using the segment embeddings;

generating control data based on the semantic segmentation data; and

controlling an actuator using the control data.

8. A system comprising:

one or more processors;

one or more computer memory in data communication with the one or more processors, the one or more computer memory having computer readable data stored thereon, the computer readable data including instructions that, when executed by one or more processors, causes the one or more processors to perform a method for semantic segmentation via a universal segmentation embedding (USE) model, the method including

receiving a digital image;

generating a set of data pairs using the digital image and a caption describing the digital image, the set of data pairs including image segments and text data describing the image segments, the set of data pairs having different levels of granularity that include (i) a first subset that includes object segment as the image segments and corresponding object data as the text data and (ii) a second subset that includes part segments as the image segments and corresponding part data as the text data, where the object segments correspond to objects and where the part segments correspond to specific features of the object segments;

generating, via an image encoder, patch embeddings based on patches of the digital image;

generating, via a segment embedding head, segment embeddings using the image segments and the patch embeddings;

generating, via a text encoder, text embeddings based on the text data;

generating contrastive loss using the segment embeddings and the text embeddings; and

updating trainable parameters of the USE model based on the contrastive loss,

wherein the USE model includes at least the image encoder and the segment embedding head.

9. The system of claim 8, wherein the method further comprises:

generating, via a multimodal large language model, the caption using the digital image and a prompt, wherein the prompt specifies that the caption mentions all visible parts of each object of the digital image.

10. The system of claim 8, wherein the step of generating the set of data pairs includes:

generating, via a grounding model, a box-text pair that includes a bounding box and corresponding text data for each image segment based on the digital image and the caption, each bounding box capturing a particular object or a particular part of the digital image; and

generating, via a mask generation model, a semantic mask for each image segment based on the digital image and the corresponding box-text pair.

11. The system of claim 8, wherein:

the image encoder includes (i) a first encoding network of a first pretrained vision foundation model, the first encoding network generating a first set of patch embeddings using the digital image and (ii) a second encoding network of a second pretrained vision foundation model, the second encoding network generating a second set of patch embeddings using the digital image; and

the patch embeddings are a concatenation of the first set of patch embeddings and the second set of patch embeddings.

12. The system of claim 8, wherein:

the image encoder includes at least (a) an encoding network from Contrastive Language-Image Pretraining (CLIP) having transformer blocks, and (b) Linear-LayerNorm (LLN) modules associated with the transformer blocks; and
the traiable parameters include LLN parameters and block scales that are assiciated withthe LLN modules.

13. The system of claim 8, wherein:

the segment embedding head includes a linear layer that outputs the segment embeddings;
and
the trainable parameters include a set of parameters of the linear layer.

14. The system of claim 8, further comprising:

an actuator that is controlled based on control data,
wherein,

the control data is generated based on semantic segmentation data, and
the semantic segmentation data is generated based on the segment embeddings.

15. One or more non-transitory computer readable mediums having computer readable data stored thereon, the computer readable data including instructions that, when executed by one or more processors, cause the one or more processors to perform a method for semantic segmentation via a universal segmentation embedding (USE) model, the method comprising:

receiving a digital image;
generating a set of data pairs using the digital image and a caption describing the digital image, the set of data pairs including image segments and text data describing the image segments, the set of data pairs having different levels of granularity that include (i) a first subset that includes object segments as the image segments and corresponding object data as the text data and (ii) a second subset that includes part segments as the image segments and corresponding part data as the text data, where the object segments correspond to objects and where the part segments correspond to specific features of the object segments;
generating, via an image encoder, patch embeddings based on patches of the digital image;
generating, via a segment embedding head, segment embeddings using the image segments and the patch embeddings;
generating, via a text encoder, text embeddings based on the text data;
generating contrastive loss using the segment embeddings and the text embeddings; and
updating trainable parameters of the USE model based on the contrastive loss,
wherein the USE model includes at least the image encoder and the segment embedding head.

UNIVERSAL SEGMENT EMBEDDING FRAMEWORK
100

IMAGE

AUTO-LABELING PIPELINE
110

UNIVERSAL SEGMENT EMBEDDING MODEL
120

SEGMENT EMBEDDINGS

FIG. 1A

110

AUTO-LABELING PIPELINE

DATASET: SEGMENT-TEXT PAIRS

SEGMENTS

TEXT DATA ("LABELS")

A BIRD, A HUMMINGBIRD

WINGS

A RED BIRD FEEDER

FIG. 1B

**FIG. 1C**

**FIG. 2**

GROUND TRUTH CAPTION

300

Someone has placed the stuff rabbit with the fruit.

REFERENCE CAPTION  304

REFERENCE PROMPT  302  112

Describe the image in detail.

MLLM

The image features a small stuffed bunny rabbit sitting on a plate next to a variety of fruits. The plate is filled with grapes and apples, creating a colorful and appetizing display. The rabbit toy is positioned in the center of the plate, surrounded by the fruits.

EXAMPLE PROMPT OF USE FRAMEWORK  306

Describe this image in detail. In your description, specifically mention ALL VISIBLE parts of each object in the image.

112

MLLM

EXAMPLE CAPTION OF  308
USE FRAMEWORK

In the center of the picture, there is a white rabbit doll with face. It has two pink ears, and the left ear has two pink dots on it. There is an orange-red apple at the right side of the rabbit and there is another red apple visible behind the rabbit. Besides, there are four purple grapes arranged in clusters.

FIG. 3

EP 4 660 962 A1

**FIG. 4**

19

FIG. 5

600

| | | | |
|---|---|---|---|
| PROCESSING SYSTEM 602 | SENSOR SYSTEM 608 | I/O DEVICES 610 | OTHER FUNCTIONAL MODULES 612 |

MEMORY SYSTEM 604

| | |
|---|---|
| UNIVERSAL SEGMENT EMBEDDING FRAMEWORK 100 | OTHER RELEVENT DATA 606 |

**FIG. 6**

**FIG. 7**

FIG. 8

FIG. 9

1000

710

SENSOR

720

CONTROL SYSTEM

1002

DISPLAY

**FIG. 10**

**FIG. 11**

INPUT IMAGE
1100

IMAGE WITH BOX-TEXT PAIRS USING GROUND TRUTH CAPTION

IMAGE WITH BOX-TEXT PAIRS USING MLLM AUGMENTED CAPTION

INPUT IMAGE
1102

IMAGE WITH BOX-TEXT PAIRS USING GROUND TRUTH CAPTION

IMAGE WITH BOX-TEXT PAIRS USING MLLM AUGMENTED CAPTION

EP 4 660 962 A1

Europäisches
Patentamt

European
Patent Office

Office européen
des brevets

# EUROPEAN SEARCH REPORT

**Application Number**

EP 25 18 1247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | International Digital Economy Academy (idea) & Community: "Grounded SAM: Assembling Open-World Models for Diverse Visual Tasks", , 25 January 2024 (2024-01-25), XP093318403, Retrieved from the Internet: URL:https://arxiv.org/pdf/2401.14159v1 [retrieved on 2025-09-24] | 1-3, 7-10,14, 15 | INV. G06V10/26 G06V10/764 G06V10/82 G06V20/70 |
| Y | * Abstract, sections 3. Grounded SAM Playground and 5. Conclusions and Prospects; figures 1,2 * ----- | 4-6, 11-13 | |
| X | KIRILLOV ALEXANDER ET AL: "Segment Anything", 2023 IEEE/CVF INTERNATIONAL CONFERENCE ON COMPUTER VISION (ICCV), IEEE, 1 October 2023 (2023-10-01), pages 3992-4003, XP034514642, DOI: 10.1109/ICCV51070.2023.00371 [retrieved on 2024-01-15] | 1-3, 7-10,14, 15 | |
| Y | * section 3. Segment Anything Model * ----- | 4-6, 11-13 | TECHNICAL FIELDS SEARCHED (IPC) G06V |
| Y | DONGSHENG JIANG ET AL: "From CLIP to DINO: Visual Encoders Shout in Multi-modal Large Language Models", ARXIV.ORG, CORNELL UNIVERSITY LIBRARY, 201 OLIN LIBRARY CORNELL UNIVERSITY ITHACA, NY 14853, 8 March 2024 (2024-03-08), XP091690788, * section 4. COMM: Combining CLIP and DINO With Multi-level Feature Merging; figure 4 * ----- -/-- | 4-6, 11-13 | |

The present search report has been drawn up for all claims

| Place of search | Date of completion of the search | Examiner |
|---|---|---|
| The Hague | 26 September 2025 | Markaki, Vasiliki |

page 1 of 2

Europäisches
Patentamt

European
Patent Office

Office européen
des brevets

## EUROPEAN SEARCH REPORT

**Application Number**

EP 25 18 1247

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FENG LI ET AL: "Semantic-SAM: Segment and Recognize Anything at Any Granularity", ARXIV.ORG, CORNELL UNIVERSITY LIBRARY, 201 OLIN LIBRARY CORNELL UNIVERSITY ITHACA, NY 14853, 10 July 2023 (2023-07-10), XP091559774, * sections 2. Data Unification: Semantics and Granularity, 3. Semantic SAM and 4. Experiments * | 1-15 | |
| A | CHAOYANG ZHU ET AL: "A Survey on Open-Vocabulary Detection and Segmentation: Past, Present, and Future", ARXIV.ORG, CORNELL UNIVERSITY LIBRARY, 201 OLIN LIBRARY CORNELL UNIVERSITY ITHACA, NY 14853, 15 April 2024 (2024-04-15), XP091727534, * section 5.1 Region-Aware Training * | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 26 September 2025 | Markaki, Vasiliki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)